(19) Europäisches Patentamt
European Patent Office
Office européen des brevets

(11) EP 4 004 109 B1

(12) EUROPÄISCHE PATENTSCHRIFT

(45) Veröffentlichungstag und Bekanntmachung des Hinweises auf die Patenterteilung:
**21.08.2024 Patentblatt 2024/34**

(21) Anmeldenummer: **20743717.9**

(22) Anmeldetag: **27.07.2020**

(51) Internationale Patentklassifikation (IPC):
***C08L 67/02*** *(2006.01)*

(52) Gemeinsame Patentklassifikation (CPC):
(C-Sets verfügbar)
**C08L 67/02** (Forts.)

(86) Internationale Anmeldenummer:
**PCT/EP2020/071156**

(87) Internationale Veröffentlichungsnummer:
**WO 2021/018848 (04.02.2021 Gazette 2021/05)**

(54) **POLYBUTYLENTEREPHTHALAT MIT NIEDRIGEM THF GEHALT**

LOW THF POLYBUTYLENE TEREPHTHALATE

TÉRÉPHTALATE DE POLYBUTYLÈNE À FAIBLE TENEUR EN THF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2019 EP 19188765**

(43) Veröffentlichungstag der Anmeldung:
**01.06.2022 Patentblatt 2022/22**

(73) Patentinhaber: **Envalior Deutschland GmbH
40474 Düsseldorf (DE)**

(72) Erfinder:
- **BIENMÜLLER, Matthias
47803 Krefeld (DE)**
- **HARMS, Sebastian
50769 Köln (DE)**

(74) Vertreter: **Envalior Association
Urmonderbaan 22
6167 RD Geleen (NL)**

(56) Entgegenhaltungen:
**EP-A1- 3 287 493**
**EP-B1- 2 427 511**
**JP-A- 2016 145 333**

EP 4 004 109 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 67/02, C08K 9/06, C08L 67/02**

## Beschreibung

Die Erfindung betrifft die Verwendung von Polyethylenterephthalat zur Herstellung Polybutylenterephthalat basierter Kraftfahrzeuginnenausstattungen mit niedrigem TVOC-Gehalt und niedrigem Tetrahydrofuran-Gehalt im Spritzguss, wobei TVOC für "Total Volatile Organic Compounds" steht.

In der Vergangenheit hat es nicht an Versuchen gefehlt, trotz einer gewissen Komplexität eine Bewertungsmöglichkeit für die Vielzahl der in Innenräumen anzutreffenden flüchtigen organischen Verbindungen, abgekürzt VOC für "Volatile Organic Compounds" zu finden. Hierfür bedient man sich eines Konstruktes in Form einer Indikatorgröße, indem als Indikator für die VOC-Konzentration in Innenräumen die Summe der Konzentrationen der Einzelverbindungen herangezogen und damit der TVOC-Wert ("Total Volatile Organic Compounds") bestimmt wird; siehe: B. Seifert, Bundesgesundheitsblatt-Gesundheitsforschung - Gesundheitsschutz, 42, Seiten 270 - 278, Springer-Verlag 1999**.**

Anders als im Falle der Bestimmung eines einzelnen Stoffes in der Raumluft, bei der das "Messobjekt" eindeutig definiert ist, insbesondere seien hier genannt die Bestimmung von n-Decan, Toluol oder Formaldehyd, muss man bei der Analyse eines VOC-Gemisches bedenken, welche Stoffe als VOC bezeichnet werden sollen. Um hier eine einheitliche Vorgehensweise zu erreichen, wurde bereits frühzeitig von einer Arbeitsgruppe der Weltgesundheitsorganisation, die sich mit Organika in der Raumluft befasste, eine Klassifizierung der organischen Verbindungen vorgenommen. Diese WHO-Klassifizierung, die auf Siedepunkten basiert, ist in **Tab. 1** dargestellt, wobei darauf hingewiesen werden muss, dass nach dieser Definition weder Formaldehyd noch Diethylhexylphthalat zu den VOC gehören.

**Tab.1:** Klassifizierung von organischen Verbindungen in der Innenraumluft; nach WHO

| Gruppenbezeichnung* | Abkürzung | Siedepunktsbereich** [C°] | Probenahmetechnik |
|---|---|---|---|
| Very volatile organic compounds | vvoc | <0 **bis 50-100** | Gasmaus oder Kanister; Adsorption an Aktivkohle |
| Volatile organic compounds | voc | 50-100 bis 250-260 | Adsorption an Tenax, graphitisiertem Kohlenstoff oder Aktivkohle |
| Semivolatile organic compounds | SVOC | 250-260 bis 380-500 | Adsorption an Polyurethanschaum oder XAD-2 |
| Organic compounds associated with particulate matter or particulate organic matter | POM | >380 | Probenahme mit Filtern |
| *Um die Herkunft der auch in deutschen Texten gebräuchlichen Abkürzungen besser zu dokumentieren, wurden in dieser Spalte der **Tab.1** die englischen Bezeichnungen verwendet. Im Deutschen entsprechen dem die folgenden Bezeichnung: VVOC=Sehr/leicht flüchtige organische Verbindungen, VOC=Flüchtige organische Verbindungen (häufig als FOV abgekürzt), SVOC=Schwerflüchtige organische Verbindungen, POM=Partikelgebundene organische Verbindungen;<br>**Polare Verbindungen sind am oberen Ende des Bereiches zu finden | | | |

Gemäß **G. Blinne, Kunststoffe 10/1999** ist Polybutylenterephthalat (PBT) in Form von Compounds, vorzugsweise verstärkt mit Glasfasern, ein wesentlicher Kunststoff in den Anwenderbranchen der Elektrotechnik/Elektronik und der Fahrzeugindustrie, insbesondere der Kraftfahrzeugindustrie. So beschreibt AutomobilKONSTRUKTION 2/2011, Seiten 18-19 den Einsatz von PBT-Blends für filigrane Lautsprechergitter und Lüftungsgitter in Kraftfahrzeug Innenräumen. WO 2013/020627 A1 beschreibt funktionalisierte Innenraumverkleidungsbauteile für ein Kraftfahrzeug zu dessen Herstellung als Matrixkunststoff unter anderem auch PBT eingesetzt werden kann.

Als teilkristalliner Kunststoff hat PBT einen engen Schmelzbereich im Bereich von 220 bis 225°C. Der hohe kristalline Anteil ermöglicht, dass spannungsfreie Formteile aus PBT kurze Zeit ohne Verformung und Schädigung bis unterhalb der Schmelztemperatur erwärmt werden können. Reine PBT-Schmelzen sind bis 280°C kurzzeitig thermisch stabil und unterliegen nicht einem wesentlichen molekularen Abbau und zeigen keine wesentliche Entwicklung von Gasen und Dämpfen. Wie alle thermoplastischen Polymere zersetzt sich jedoch auch PBT bei übermäßiger thermischer Beanspruchung, insbesondere bei Überhitzung oder beim Reinigen durch Abbrennen. Hierbei bilden sich gasförmige Zersetzungsprodukte. Oberhalb etwa 300°C beschleunigt sich die Zersetzung, wobei zunächst hauptsächlich Tetrahydrofuran (THF) und Wasser entstehen.

Gemäß EP 2 029 271 A1 entsteht THF schon während der Produktion des PBT durch intramolekulare Kondensation aus dem Monomer 1,4-Butandiol (BDO). Die Reaktion kann sowohl durch die eingesetzte Terephthalsäure

(PTA), als auch durch den zumeist zur Herstellung des PBT eingesetzten Titan-basierten Katalysator katalysiert werden. Alternativ kann statt PTA auch Terephthalsäuredimethylester (DMT) eingesetzt werden.

Zusätzlich wird aber auch THF bei hohen Temperaturen in der Schmelze des PBT laufend nachgebildet. Dieser, auch als "back-biting" beschriebene Prozess, findet an den BDO-Endgruppen statt. Wie auch die THF-Bildung aus BDO-Monomer, ist diese Reaktion eine intramolekulare Kondensation, welche zu dem unerwünschten Nebenprodukt Tetrahydrofuran führt. Auch die THF Nachbildung aus dem Polymer in der Schmelze wird sowohl durch Säure-Endgruppen (PTA) als auch durch vorhandenen Katalysator (Titanbasiert) katalysiert.

Die Auswirkungen von Tetrahydrofuran auf die menschliche Gesundheit und die Umwelt wurde unter **REACH** im Jahr 2013 im Rahmen der Stoffbewertung von Deutschland geprüft. Die **IARC** (Internationale Agentur für Krebsforschung) stufte Tetrahydrofuran im Jahr 2017 als möglicherweise krebserzeugend ein.

Abgesehen von apparativen Anstrengungen zur Vermeidung von THF während der Herstellung von PBT ist man im Zuge des zunehmenden Gesundheitsbewusstseins und steigender Verbraucheransprüche an die olfaktorische Wertigkeit von Kraftfahrzeugen bestrebt, mögliche Ausgasungen von im Kraftfahrzeuginnenraum verbauten Materialien, insbesondere unter Einfluss von erhöhten Temperaturen infolge von Sonneneinstrahlung, zu reduzieren, wenn nicht sogar vollständig zu vermeiden. Zu diesem Zweck hat der Verband der Automobilhersteller (VDA) zur Quantifizierung der Ausgasungen aus in Kraftfahrzeuginnenräumen verbauten Bauteilen zwei auf unterschiedlichen gaschromatographischen Methoden beruhende Prüfvorschiften herausgegeben, VDA 277 und VDA 278.

Die VDA 277, welche auf einer statischen Headspace-Methode und Flammenionisationsdetektion (FID) basiert und den Gesamtgehalt TVOC an flüchtigen Kohlenstoffverbindungen angibt (TVOC = Total Volatile Organic Compounds), wurde 1995 veröffentlicht. 2002 folgte die VDA 278, welche auf einer dynamischen Headspace-Methode, der sogenannten Thermodesorption, beruht und sowohl die leichtflüchtigen organischen Verbindungen (VOC), als auch die kondensierbaren Anteile (Fog Wert) angibt. Die korrespondierenden Grenzwerte, welche stets für die Bauteile nach Spritzguss gelten, werden von den Automobilherstellern (OEMs) festgelegt, orientieren sich aber üblicherweise an den Vorschlägen des VDA.

Im Hinblick auf die Erfordernisse der VDA 277 wurden daher in der Vergangenheit zahlreiche Anläufe gestartet, die THF Emissionen von PBT zu reduzieren:

EP 0 683 201 A1 Zugabe einer Sulfonsäurekomponente bei der Polymerisation, wobei allerdings die Sulfonsäurekomponenten selbst inzwischen als gesundheitsgefährdend bis krebserregend eingestuft werden;

EP 1 070 097 A1**(**WO99/50345 A1**)** Zugabe von Polyacrylsäure zu Polyestern auf Basis von Milchsäure bei der Polymerisation zur Deaktivierung von bei der PBT Herstellung eingesetzten Sn - oder Sb-Katalysatoren;

EP 1 999 181 A2 **(**WO2007/111890A2**)** Zugabe einer Phosphor-haltigen Komponente zur Deaktivierung des bei der PBT Herstellung eingesetzten Titan-Katalysators. Die in EP 1 999 181 A2 angegebenen Werte der Emissionen sind prozentual, d.h. es sind keine Absolutwerte und darüber hinaus verbesserungswürdig;

EP 2 427 511 B1 Zugabe eines Styrol-Acryl-Polymers (z. B. Joncryl®ADR-4368) in einer Konzentrationen von 0,01 bis 2%, was jedoch zu Kettenverlängerung und Erhöhung des Molekulargewichts des PBT führte;

EP 2 816 081 A1 Zugabe eines Chelatbildners aus der Gruppe Natriumhypophopshit, Nitrilotriessigsäure, Dinatriumsalz von EDTA, Diammoniumsalz von EDTA, EDTA, Diethylentriaminpentaessigsäure, Hydroyethylendiamintriessigsäure, Ethylendiamindibernsteinsäure und insbesondere 1,3-Propylendiamintetraessigsäure;

EP 3 287 493 A1 offenbart in den Beispielen Spritzgusszusammensetzungen umfassend 100 Gew.-Teile Polybutylenterephthalat, 8,4 bzw. 8,7 Gew.-Teile Polyethylenterephthalat und 50 bzw. 52 Gew.-Teile Silan-beschichtete Glasfasern;

JP 2016 145333 A lehrt in Beispiel 1 eine Spritzgusszusammensetzung umfassend 100 Gew.-Teile Polybutylenterephthalat, ca. 13 Gew.-Teile Polyethylenterephthalat und Glasfasern;

EP 3 004 242 A1 **(**WO2014/195176 A1**)** Zugabe von Natriumhypophosphit oder epoxyfunktionalisiertem Styrol-Acrylsäure Polymer zur Herstellung von PBT Formteilen mit kleiner oder gleich 100 $\mu$gC/g TVOC nach VDA277.

Ausgehend von diesem Stand der Technik bestand die Aufgabe der vorliegenden Erfindung darin, PBT basierte Compounds zur Verarbeitung im Spritzguss für Kraftfahrzeuginnenausstattungen mit optimiertem TVOC-Wert und THF-Ausgasungsverhalten bereit zu stellen, wobei das am Spritzgussteil gemessene Ausgasungsverhalten einen TVOC < 50$\mu$gC/g gemäß VDA 277 und einen $VOC_{THF}$ < 5 $\mu$g/g gemäß VDA 278 im Sinne des Verbands der Automobilindustrie

(VDA) bedeutet. Vorzugsweise soll diese Aufgabe ohne den Einsatz der im obigen Stand der Technik genannten Additive gelöst werden.

Überraschend wurde gefunden, dass allein Polyethylenterephthalat (PET) zu einer Reduktion des Ausgasens von THF aus PBT führt und damit die Einhaltung der Anforderungen sowohl aus VDA 277, als auch **zusätzlich** der Anforderungen nach VDA 278 für PBT basierte Bauteile in Kraftfahrzeuginnenräumen ermöglichen.

Versuche im Rahmen der vorliegenden Erfindung zeigten überraschenderweise, dass der Zusatz des erfindungsgemäß einzusetzenden PET zu einer deutlichen, und über den Verdünnungseffekt des PET hinausgehenden Reduktion der Gesamtemission TVOC sowie der THF Emission $TVOC_{THF}$ bzw. $VOC_{THF}$ führt. Allein durch den erfindungsgemäßen Einsatz von PET sank der messbare TVOC Wert am durch Spritzguss gefertigten Bauteil nach VDA 277 von durchschnittlich 90 bis 100 μgC/g auf unter 45 μgC/g. Der THF Gehalt sank von durchschnittlich 80 - 85 μgC/g auf unter 30 μgC/g. Der $VOC_{THF}$ nach VDA 278 reduzierte sich durch Anwesenheit von PET von durchschnittlich 6 bis 7 μg/g auf unter 2 μg/g. Hierbei beziehen sich alle Angaben auf den in der entsprechenden Prüfvorschrift definierten Zustand, wie er unten beschrieben ist.

Die Erfindung betrifft die Verwendung von PET zur Reduktion des Ausgasens von Tetrahydrofuran aus PBT basierten Compounds für die Verarbeitung im Spritzguss zu Bauteilen in Kraftfahrzeuginnenräumen mit einem nach VDA 277 zu bestimmenden TVOC < 50μgC/g und einem nach VDA 278 zu bestimmenden $VOC_{THF}$ < 8 μg/g, wobei auf 100 Massenanteile PBT 5 bis 30 Masseneinteile PET eingesetzt werden, mit der Maßgabe, dass PET und PBT nicht als Copolymerisat, sondern als Mischung vorliegen.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Die im Rahmen dieser Anmeldung genannten Normen beziehen sich auf die zum Anmeldetag dieser Erfindung geltende Fassung, sofern nicht anders angegeben. Der Schmelzindex, engl.: MFR = Melt Mass-Flow Rate bzw. MFI = Melt Flow Index, dient zur Charakterisierung des Fließverhaltens eines thermoplastischen Kunststoffes. Zur Messung des Schmelzindex werden Schmelzindexmessgeräte verwendet, die eine besondere Ausführungsform eines Kapillarrheometers darstellen. Die Schmelzindexbestimmung ist in **DIN EN ISO 1133 [2]** standardisiert. Als Schmelzindex wird der MFR-Wert definiert, der die Materialmenge in Gramm angibt, die bei einem bestimmten Druck und einer bestimmten Temperatur in zehn Minuten durch eine Kapillare mit definierten Abmessungen fließt. Der Schmelzindex wird in der Einheit g • $(10\ min)^{-1}$ angegeben; Siehe: **https://wiki.polymerservice-merseburg.de/index.php?title=Schmelze-Masseflie%C3%9Frate&printable=yes.** Hinsichtlich VDA 277 wird im Rahmen der vorliegenden Erfindung auf die Fassung von 1995 Bezug genommen, hinsichtlich VDA 278 wird auf die Fassung vom Oktober 2011 Bezug genommen.

Die Prüfung des TVOC, $TVOC_{THF}$ und des $VOC_{THF}$ im Rahmen der vorliegenden Erfindung erfolgte gemäß der Vorgaben der jeweiligen Norm:

Die VDA 277 schreibt vor, dass die Probenentnahme unmittelbar nach Wareneingang oder in einem Zustand, der diesem entspricht, zu erfolgen hat. Transport und Lagerung der spritzfrischen Teile haben dabei luftdicht in alubeschichteten PE-Beuteln (PE = Polyethylen) zu erfolgen, und es findet in der Regel keine Konditionierung statt.

Die VDA 278 regelt, dass im Regelfall das zu untersuchende Material nach seiner Herstellung innerhalb von 8 Stunden luftdicht in alubeschichteten PE-Beuteln verpackt werden soll und die Probe dem Labor unverzüglich zuzustellen ist. Vor der Messung sollen die Proben 7 Tage im Normklima (23°C, 50% rel. Feuchte) konditioniert werden.

Der im Rahmen der vorliegenden Erfindung bestimmte $TVOC_{THF}$ wurde nach dem gleichen Verfahren wie TVOC gemäß VDA277 bestimmt, wobei sich die Auswertung auf die Einzelsubstanz THF bezog. $TVOC_{THF}$ macht daher im Rahmen der vorliegenden Erfindung eine Aussage über das THF-Emissionsverhalten einer Probe.

$VOC_{THF}$ wird im Rahmen der vorliegenden Erfindung nach dem gleichen Verfahren wie VOC gemäß VDA278 bestimmt, wobei sich die Auswertung auf die Einzelsubstanz THF bezieht. $VOC_{THF}$ macht daher eine Aussage über das THF-Emissionsverhalten einer Probe.

Compoundierung (aus dem Englischen: to compound = "zusammensetzen") ist ein Begriff aus der Kunststofftechnik, der die Aufbereitung von Kunststoffen durch Beimischung von Zuschlagstoffen, vorzugsweise von Füllstoffen, Additiven usw. zur Erzielung erwünschter Eigenschaftsprofile beschreibt. Die Compoundierung erfolgt im Rahmen der vorliegenden Erfindung in einem Doppelschneckenextruder mit Vakuum-Entgasungs-Zone, vorzugsweise einem gleichläufigen Doppelschneckenextruder mit Vakuum-Entgasungs-Zone. Die Compoundierung umfasst die Verfahrensoperationen Fördern, Aufschmelzen, Dispergieren, Mischen, Entgasen und Druckaufbau. Das Produkt einer Compoundierung ist ein Compound.

Die Compoundierung hat den Zweck aus dem Kunststoffrohstoff, im Falle der vorliegenden Erfindung dem aus der Reaktion von Butandiol mit PTA oder DMT anfallenden PBT, eine Kunststoff-Formmasse mit den bestmöglichen Eigenschaften für die Verarbeitung und spätere Anwendung, hier in Form einer Kraftfahrzeuginnenausstattung nach VDA 277 und VDA 278, herzustellen. Die Aufgaben der Compoundierung sind Änderung der Teilchengröße, Einarbeitung von Additiven und die Entfernung von Bestandteilen. Da viele Kunststoffe bei ihrer Herstellung als Pulver oder grobstückige Harze anfallen und somit für Verarbeitungsmaschinen, insbesondere Spritzgussmaschinen, unbrauchbar sind, ist die Weiterverarbeitung dieser Rohmassen besonders wichtig. Die fertige Mischung aus Polymer, hier PBT, und Zusatzstoffen nennt man Formmasse. Die einzelnen Komponenten der Formmassen können vor ihrer Verarbeitung in verschiedenen Aggregatszuständen wie pulverförmig, körnig oder flüssig/ fließfähig vorliegen. Ziel des Einsatzes eines Compounders ist es, die Komponenten möglichst homogen zur Formmasse zu vermischen. Vorzugsweise werden folgende Additive bei einer Compoundierung eingesetzt: Antioxidantien, Gleitmittel, Schlagzähmodifikatoren, Antistatika, Fasern, Talkum, Bariumsulfat, Kreide, Thermostabilisatoren, Eisenpulver, Lichtschutzmittel, Trennmittel, Entformungshilfen, Nukleierungsmittel, UV-Absorber, Flammschutzmittel, PTFE, Glasfasern, Ruß, Glaskugeln, Silikon.

Beim Compoundieren können zudem auch Bestandteile entfernt werden. Vorzugsweise werden zwei Bestandteile entfernt, Feuchtanteile (Entfeuchten) oder niedermolekulare Bestandteile (Entgasen). Im Rahmen der vorliegenden Erfindung wird das bei der Synthese des PBT als Nebenprodukt anfallende THF durch Anlegen von Vakuum der Formmasse entzogen.

Zwei wesentliche Schritte beim Compoundieren sind das Mischen und Granulieren. Beim Mischen unterscheidet man distributives Mischen, d.h. das gleichmäßige Verteilen aller Partikel in der Formmasse und das dispersive Mischen, d.h. die Verteilung und Zerkleinerung der einzumischenden Komponenten. Der Mischprozess selber kann entweder in der viskosen Phase oder in der Feststoffphase durchgeführt werden. Beim Mischen in der Feststoffphase ist der distributive Effekt bevorzugt, da die Zusatzstoffe schon in zerkleinerter Form vorliegen. Da das Mischen in der Feststoffphase selten ausreicht um eine gute Mischqualität zu erzielen, wird häufig vom Vormischen gesprochen. Die Vormischung wird anschließend im Schmelzezustand gemischt. Das viskose Mischen setzt sich im Allgemeinen aus fünf Arbeitsgängen zusammen, dem Aufschmelzen des Polymers und der Zusatzstoffe (Letztere sofern möglich), dem Zerteilen der Feststoffagglomerate (Agglomerate sind Zusammenballungen), dem Benetzen der Additive mit Polymerschmelze, dem gleichmäßigen Verteilen der Komponenten und dem Abtrennen unerwünschter Bestandteile, vorzugsweise Luft, Feuchte, Lösemittel und im Falle des erfindungsgemäß zu betrachtenden PBT das THF. Die für das viskose Mischen benötigte Wärme wird im Wesentlichen durch die Scherung und Reibung der Komponenten verursacht. Beim erfindungsgemäß zu betrachtenden PBT wird vorzugsweise das viskose Mischen angewandt.

Um die Absorption und Diffusionsvorgänge vom Zusatzstoff auf das Granulatkorn zu verbessern, muss gegebenenfalls bei einer höheren Temperatur gemischt werden. Dabei kommt ein Heiz-/Kühlmischersystem zum Einsatz. Das zu mischende Material wird im Heizmischer gemischt und fließt anschließend in einen Kühlmischer, wo es zwischengelagert wird. Auf diese Weise werden Dry Blends hergestellt.

Vorzugsweise zum Compoundieren von PBT werden gleichläufige Doppelschneckenextruder / Compoundierextruder eingesetzt. Die Aufgabe eines Compounders/Extruders besteht darin, die ihm zugeführte Kunststoffmasse einzuziehen, zu verdichten, diese gleichzeitig unter Energiezufuhr zu plastifizieren und zu homogenisieren sowie unter Druck einem profilgebenden Werkzeug zuzuführen. Doppelschneckenextruder mit gleichläufigem Schneckenpaar eignen sich aufgrund der guten Mischung für die Aufbereitung (Compoundierung) von Kunststoffen, insbesondere von PBT. Ein gleichläufiger Doppelschneckenextruder wird in mehrere Verfahrenszonen eingeteilt. Diese Zonen sind miteinander gekoppelt und können nicht unabhängig voneinander betrachtet werden. So läuft z.B. das Einarbeiten von Fasern in die Schmelze, nicht nur in der vorbestimmten Dispergierzone ab, sondern auch in der Austragszone und in anderen Schneckengängen. Da die meisten Verarbeiter den Kunststoff, im vorliegenden Fall das PBT, als Granulat benötigen, spielt das Granulieren eine immer wichtigere Rolle. Man unterscheidet grundsätzlich zwischen Heiß- und Kaltabschlag. Je nach Verarbeitung resultieren daraus verschiedene Kornformen. Im Falle des Heißabschlags erhält man den Kunststoff vorzugsweise in Perlen oder Linsenkornform. Im Falle des Kaltabschlags erhält man den Kunststoff vorzugsweise in Zylinder oder Würfelformen.

Beim Heißabschlag wird der Extrusionsstrang direkt nach einer Düse, durch ein mit Wasser überströmtes, rotierendes Messer abgehackt. Das Wasser verhindert dabei die Zusammenklebung der einzelnen Granulatkörner und kühlt das Material ab. Meistens wird zur Kühlung Wasser verwendet, es kann aber auch Luft verwendet werden. Die Auswahl des richtigen Kühlmittels ist daher werkstoffabhängig. Der Nachteil einer Wasserkühlung ist, dass das Granulat anschließend getrocknet werden muss. Beim Kaltabschlag werden die Stränge zuerst durch ein Wasserbad gezogen und anschließend im festen Zustand durch eine rotierende Messerwalze (Granulator) in die gewünscht Länge geschnitten. Im Falle des erfindungsgemäß einzusetzenden PBT wird der Kaltabschlag angewandt.

## Bevorzugte Ausführungsformen

Vorzugsweise betrifft die vorliegende Offenbarung mittels Spritzguss erhältliche Kraftfahrzeuginnenausstattungen enthaltend Compounds basierend auf PBT und wenigstens PET worin auf 100 Massenanteile PBT 5 bis 30 Massenanteile PET eingesetzt werden, mit einem nach VDA 277 zu bestimmenden TVOC < 50μgC/g und einem nach VDA 278 zu bestimmenden $VOC_{THF}$ < 5 μg/g.

## Compounder

Erfindungsgemäß bevorzugt wird zum Compoundieren des PBT für Kraftfahrzeuginnenausstattungen ein Doppelschneckenextruder, besonders bevorzugt mit gleichläufigem Schneckenpaar, eingesetzt. Die Aufgabe eines Compounders, insbesondere in Form eines Doppelschneckenextruders, besteht darin, die ihm zugeführte Kunststoffmasse einzuziehen, zu verdichten, diese gleichzeitig unter Energiezufuhr zu plastifizieren und zu homogenisieren sowie unter Druck einem profilgebenden Werkzeug zuzuführen. Erfindungsgemäß bevorzugt einzusetzende Doppelschneckenextruder eignen sich zum Compoundieren von PBT, vorzugsweise zum Einarbeiten wenigstens eines Füllstoffs ins PBT.

Erfindungsgemäß einzusetzende Doppelschneckenextruder sind dem Fachmann beispielsweise aus DE 203 20 505 U1 bekannt und werden vorzugsweise von Coperion Werner & Pfleiderer GmbH & Co.KG, Stuttgart, angeboten. Ein erfindungsgemäß einzusetzender Doppelschneckenextruder wird in mehrere Verfahrens-Zonen eingeteilt. Diese Zonen sind miteinander gekoppelt und können nicht unabhängig voneinander betrachtet werden. DE 203 20 505 U1, deren Inhalt von der vorliegenden Erfindung vollumfänglich umfasst wird, unterteilt die Verfahrens-Zonen, im Rahmen der vorliegenden Erfindung auch als Compoundierstrecke bezeichnet, eines erfindungsgemäß bevorzugt einzusetzenden Doppelschneckenextruders in die Zuführ-Einrichtung (14), Einzugs-Zone (15), Aufschmelz-Zone (16), Atmosphären-Entgasungs-Zone (17), wenigstens eine Füllstoff-Zuführ-Zone (18), Füllstoff-Einmisch-Zone (19), Rückstau-Zone (20), Vakuum-Entgasungs-Zone (21), Druckaufbau-Zone (22) und Austrags-Zone (23).

Erfindungsgemäß bevorzugt wird der Doppelschneckenextruders mit einem Durchsatz im Bereich von 3 bis 10 t/h (Tonnen pro Stunde) betrieben.

Erfindungsgemäß bevorzugt wird ein Doppelschneckenextruder und mit einem Schneckendurchmesser im Bereich von 60 mm bis 100 mm eingesetzt.

Erfindungsgemäß bevorzugt wird ein Druck im Bereich von 300 +/-50mbar an der Vakuum-Entgasungs-Zone des Doppelschneckenextruders angelegt. Druckangaben im Rahmen der vorliegenden Erfindung sind Unterdrücke bzw. Vakuum und beziehen sich auf den jeweils herrschenden Atmosphärendruck (relativer Druck). Gemäß **DIN 28400-1** wird Vakuum definiert als "der Zustand eines Gases, wenn in einem Behälter der Druck des Gases und damit die Teilchenzahldichte niedriger ist als außerhalb, oder wenn der Druck des Gases niedriger ist als 300 mbar, d. h. kleiner als der niedrigste auf der Erdoberfläche vorkommende Atmosphärendruck".

Vorzugsweise werden zur Erzielung eines erfindungsgemäß angestrebten Drucks von 300 +/-50mbar an der Vakuum-Entgasungs-Zone des Doppelschneckenextruders Vakuumpumpen aus der Reihe Drehschieberpumpen, Flüssigkeitsringpumpen, Scrollpumpen, Wälzkolbenpumpen und Schraubenpumpen eingesetzt. Siehe: **https://www.pfeiffer-vacuum.com/de/know-how/einfuehrung-in-die-vakuumtechnik/allgemeines/vakuumdefinition/**

Die Compoundierstrecke eines erfindungsgemäß einzusetzenden Doppelschneckenextruders umfasst Zuführ-Einrichtung, Einzugs-Zone, Aufschmelz-Zone, Atmosphären-Entgasungs-Zone, wenigstens eine Füllstoff-Zuführ-Zone, Füllstoff-Einmisch-Zone, Rückstau-Zone, Vakuum-Entgasungs-Zone, Druckaufbau-Zone und Austrags-Zone. Die Vakuum-Entgasungs-Zone befindet sich erfindungsgemäß im letzten Drittel der Compoundierstrecke, wobei sich das letzte Drittel auf die Gesamtlänge des Doppelschneckenextruders bezieht. Die Gesamtlänge des Doppelschneckenextruders ist definiert als der Abstand zwischen dem Beginn der Einzugs-Zone und dem Ende der Austragszone. Das letzte Drittel schließt die Austragszone ausdrücklich mit ein.

Das Ergebnis des Compoundierens von PBT mit PET, vorzugsweise im Doppelschneckenextruder, ist ein THF reduziertes PBT-Compound in Granulatform mit sehr niedrigem THF Gehalt. Dieser THF Gehalt ist so niedrig, dass selbst nach Verarbeitung des Granulats im Spritzguss, wobei Zersetzungsprozesse zu einer THF Nachbildung führen, noch Erzeugnisse, insbesondere Kraftfahrzeuginnenausstattungen, spritzgegossen werden können, die einen nach VDA 277 zu bestimmenden TVOC < 50$\mu$gC/g und einen nach VDA 278 zu bestimmenden $VOC_{THF}$ < 5 $\mu$g/g aufweisen.

**Polybutylenterephthalat**

Erfindungsgemäß einzusetzendes PBT [CAS No. 24968-12-5] ist beispielsweise unter der Marke Pocan® bei der LANXESS Deutschland GmbH, Köln, erhältlich.

Vorzugsweise liegt die in einer 0,5 gew.-%igen Lösung in einem Phenol/o-Dichlorbenzolgemisch (Gew.-Verh. 1 :1 bei 25°C) gemäß **DIN EN ISO 1628-5** zu bestimmende Viskositätszahl des erfindungsgemäß einzusetzenden PBT in einem Bereich von 50 bis 220 $cm^3$/g, besonders bevorzugt im Bereich von 80 bis 160 $cm^3$/g; Siehe: **Broschüre der Schott Instruments GmbH, O. Hofbeck, 2007-07.**

Insbesondere bevorzugt ist PBT, dessen durch Titrationsverfahren, insbesondere Potentiometrie, zu bestimmender Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Gehalt an Carboxylendgruppen (CEG) im erfindungsgemäß einzusetzenden PBT wurde im Rahmen der vorliegenden Erfindung durch potentiometrische Titration der bei Umsetzen einer in Nitrobenzol gelösten Probe des PBT mit einem definierten Überschuss an Kaliumacetat freigesetzten Essigsäure bestimmt.

Polyalkylenterephthalate werden vorzugsweise mit Ti-Katalysatoren hergestellt. Vorzugsweise weist ein erfindungsgemäß einzusetzendes PBT nach der Polymerisation einen mittels Röntgen-Fluoreszenz-Analyse (RFA) nach **DIN 51418** zu bestimmenden Ti-Gehalt von ≤ 250 ppm, besonders bevorzugt < 200 ppm, insbesondere bevorzugt <

150 ppm auf. Derartige Polyester werden vorzugsweise nach dem Verfahren in DE 101 55 419 B4 hergestellt.

**Polyethylenterephthalat (PET)**

Das erfindungsgemäß zur Reduktion von THF in PBT als Mischungspartner einzusetzende PET (CAS No. 25038-59-9) ist ein Reaktionsprodukt aus einer aromatischen Dicarbonsäure oder ihren reaktionsfähigen Derivaten, bevorzugt Dimethylestern oder Anhydriden, und einem aliphatischen, cycloaliphatischen oder araliphatischen Diol und Mischungen dieser Edukte. Erfindungsgemäß bevorzugt einzusetzendes PET wird aus Terephthalsäure (oder ihren reaktionsfähigen Derivaten) und dem aliphatischen Diol mit 2 C-Atomen nach bekannten Methoden hergestellt **(**Kunststoff-Handbuch, Bd. VIII, S. 695 - 703, Karl-Hanser-Verlag, München 1973**).** Vorzugsweise wird das PET über wenigstens eine Füllstoff-Zuführ-Zone in der Compoundierstrecke des Doppelschneckenextruders eincompoundiert.

Bevorzugt einzusetzendes PET enthält mindestens 80 Mol-%, besonders bevorzugt mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykolreste.

Bevorzugt einzusetzendes PET kann neben Terephthalsäureresten bis zu 20 Mol-% Reste anderer aromatische Dicarbonsäuren mit 8 bis 14 C-Atomen oder Reste aliphatischer Dicarbonsäuren mit 4 bis 12 C-Atomen enthalten, besonders bevorzugt Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, oder Cyclohexandicarbonsäure.

Bevorzugt einzusetzendes PET kann neben Ethylenglykolresten bis zu 20 Mol-% andere aliphatische Diole mit 3 bis 12 C-Atomen oder cycloaliphatische Diole mit 6 bis 21 C-Atomen enthalten. Besonders bevorzugt sind Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3, 2,2,4-Trimethylpentandiol-1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan oder 2,2-Bis-(4-hydroxypropoxyphenyl)-propan **(**DE-A 24 07 674**,** DE-A 24 07 776**,** DE-A 27 15 932**).**

In einer Ausführungsform kann das erfindungsgemäß als Mischungspartner einzusetzende PET durch Einbau relativ kleiner Mengen 3- oder 4-wertiger Alkohole oder 3- oder 4-basischer Carbonsäuren, wie sie z.B. in der DE-A 19 00 270 beschrieben sind, verzweigt werden. Bevorzugte Verzweigungsmittel sind Trimesinsäure, Trimellitsäure, Trimethylolethan und Trimethylolpropan und Pentaerythrit.

Erfindungsgemäß als Mischungspartner des PBT einzusetzendes PET weist vorzugsweise eine intrinsische Viskosität im Bereich von ca. 30 $cm^3/g$ bis 150 $cm^3/g$, besonders bevorzugt im Bereich von 40 $cm^3/g$ bis 130 $cm^3/g$, insbesondere bevorzugt im Bereich von 50 $cm^3/g$ bis 100 $cm^3/g$ auf, jeweils gemessen in Analogie zu ISO1628-1 in Phenol/o-Dichlorbenzol - 1:1 Gew.-Teile - bei 25°C mittels eines Ubbelohde Viskosimeters. Zur Messung der Viskosität wird das Material auf einen Feuchtegehalt von maximal 0.02%, ermittelt mittels der dem Fachmann bekannten Karl Fischer Methode, in einem handelsüblichen Umlufttrockner bei 120°C getrocknet.

**Füllstoffe**

In einer bevorzugten Ausführungsform wird zusätzlich zum Polybutylenterephthalat und zum Polyethylenterephthalat wenigstens ein Füllstoff über wenigstens eine Füllstoff-Zuführ-Zone in der Compoundierstrecke des Doppelschneckenextruders eincompoundiert. Erfindungsgemäße Compounds enthalten in diesem Fall vorzugsweise 0,001 bis 70 Massenanteile, besonders bevorzugt 5 bis 50 Massenanteile, ganz besonders bevorzugt 9 bis 48 Massenanteile wenigstens eines Füllstoffes, jeweils bezogen auf 100 Massenanteile Polybutylenterephthalat.

Erfindungsgemäß einzusetzende Füllstoffe werden vorzugsweise ausgewählt aus der Gruppe Talk, Glimmer, Silikat, Quarz, Titandioxid, Wollastonit, Kaolin, Kyanit, amorphe Kieselsäuren, Magnesiumcarbonat, Kreide, Feldspat, Bariumsulfat, Glaskugeln und faserförmige Füllstoffe, insbesondere Glasfasern oder Kohlenstofffasern. Insbesondere bevorzugt werden Glasfasern eingesetzt.

Gemäß **"http://de.wikipedia.org/wiki/Faser-Kunststoff-Verbund"** unterscheidet man geschnittene Fasern, auch als Kurzfasern bezeichnet, mit einer Länge im Bereich von 0,1 bis 1mm, Langfasern mit einer Länge im Bereich von 1 bis 50mm und Endlosfasern mit einer Länge L > 50mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200μm liegt.

Erfindungsgemäß bevorzugt werden als Füllstoff geschnittene Langglasfasern mit einer Ausgangslänge im Bereich von 1 bis 50 mm, besonders bevorzugt im Bereich von 1 bis 10mm, ganz besonders bevorzugt im Bereich von

2 bis 7 mm eingesetzt. Die Ausgangslänge bezeichnet die durchschnittliche Länge der Glasfasern wie sie vor einer Compoundierung der erfindungsgemäßen Compounds zu einer erfindungsgemäßen Formmasse vorliegen. Die als Füllstoff einzusetzenden Fasern, vorzugsweise Glasfasern, können bedingt durch die Compoundierung im Erzeugnis einen kleineren d90- bzw. d50-Wert aufweisen, als die ursprünglich eingesetzten Fasern bzw. Glasfasern. So liegt der arithmetische Mittelwert der Faserlänge bzw. Glasfaserlänge nach der Verarbeitung häufig nur noch im Bereich von 150 μm und 300 μm, was mittels Laserdiffraktometrie gemäß **ISO 13320** zu ermitteln ist.

Die Ermittlung der Faserlänge und Faserlängenverteilung bzw. Glasfaserlänge und Glasfaserlängenverteilung erfolgt im Rahmen der vorliegenden Erfindung im Falle verarbeiteter Fasern bzw. Glasfasern gemäß **ISO 22314,** welche zunächst eine Veraschung der Proben bei 625°C vorsieht. Anschließend wird die Asche auf einen mit demineralisiertem Wasser bedeckten Objektträger in einer geeigneten Kristallisierschale gegeben und die Asche ohne Wirkung von mechanischen Kräften im Ultraschallbad verteilt. Der nächste Schritt sieht die Trocknung im Ofen bei 130°C vor und anschließend erfolgt mit Hilfe von lichtmikroskopischen Aufnahmen die Ermittlung der Glasfaserlänge. Dazu werden von drei Aufnahmen mindestens 100 Glasfasern ausgemessen, so dass insgesamt 300 Glasfasern zur Ermittlung der Länge herangezogen werden. Die Glasfaserlänge kann dabei entweder als arithmetischer Mittelwert $l_n$ nach Gleichung

$$l_n = \frac{1}{n} \cdot \sum_{i}^{n} l_i$$

mit $l_i$ = Länge der iten Faser und n = Anzahl der gemessenen Fasern berechnet und in geeigneter Weise als Histogramm dargestellt oder bei einer angenommenen Normalverteilung der gemessenen Glasfaserlängen I mit Hilfe der Gauß-Funktion nach Gleichung

$$f(l) = \frac{1}{\sqrt{2\pi} \cdot \sigma} \cdot e^{-\frac{1}{2}\left(\frac{l-l_c}{\sigma}\right)^2}$$

bestimmt werden. Dabei sind $l_c$ und σ spezielle Kennwerte der Normalverteilung; $l_c$ ist der mittlere Wert und σ die Standardabweichung (siehe: M. Schoßig, Schädigungsmechanismen in faserverstärkten Kunststoffen, 1, 2011, Vieweg und Teubner Verlag, Seite 35, ISBN 978-3-8348-1483-8**).** Nicht in eine Kunststoffmatrix eingebundene Glasfasern werden hinsichtlich ihrer Längen gemäß obiger Methoden jedoch ohne die Aufbereitung durch Veraschung und Abtrennung von der Asche analysiert.

Die erfindungsgemäß bevorzugt als Füllstoff einzusetzenden Glasfasern [CAS Nr. 65997-17-3)] haben bevorzugt einen Faserdurchmesser im Bereich von 7 bis 18 μm, besonders bevorzugt im Bereich von 9 bis 15 μm, der durch wenigstens eine dem Fachmann zur Verfügung stehende Möglichkeit zu ermitteln ist, insbesondere zu ermitteln durch μ-Röntgen-Computertomographie in Analogie zu "Quantitative Messung von Faserlängen und -verteilung in faserverstärkten Kunststoffteilen mittels μ-Röntgen-Computertomographie", J.KASTNER, et al. DGZfP-Jahrestagung 2007 - Vortrag 47**.** Die als Füllstoff vorzugsweise einzusetzenden Glasfasern werden bevorzugt als geschnittene oder gemahlene Glasfasern zugesetzt.

Die Füllstoffe, vorzugsweise Glasfasern, werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der als Füllstoff vorzugsweise einzusetzenden Glasfasern sind Silanverbindungen der allgemeine Formel (I)

$$(X\text{-}(CH_2)_q)_k\text{-Si-}(O\text{-}CrH_{2r+1})_{4-k} \qquad (I)$$

worin

X für $NH_2$-, Carboxyl-, HO- oder

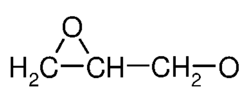

steht,

q für eine ganze Zahl von 2 bis 10, bevorzugt 3 bis 4 steht,

r für eine ganze Zahl von 1 bis 5, bevorzugt 1 bis 2 steht und

k für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.

Für die Ausrüstung der als Füllstoff vorzugsweise einzusetzenden Glasfasern wird der Haftvermittler, bevorzugt die Silanverbindungen gemäß Formel (I), bevorzugt in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% des Füllstoffs, eingesetzt.

Die als Füllstoff vorzugsweise einzusetzenden Glasfasern können bedingt durch die Verarbeitung zum Compound bzw. zum Erzeugnis im Compound bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 μm bis 300 μm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/$m^2$ und 216 g/$m^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter **"http://de.wikipedia.org/wiki/Glasfaser".** Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z. B. Alu-Legierungen), wobei das spezifische Gewicht von E-Glasfasern enthaltenden Laminaten niedriger ist, als das der Metalle. E-Glasfasern sind unbrennbar, hitzefest bis ca. 400°C und beständig gegen die meisten Chemikalien und Witterungseinflüsse.

Besonders bevorzugt werden als Füllstoff ferner plättchenförmige mineralische Füllstoffe eingesetzt. Unter einem plättchenförmigen, mineralischen Füllstoff wird erfindungsgemäß wenigstens ein mineralischer Füllstoff mit stark ausgeprägtem plättchenförmigen Charakter aus der Gruppe Kaolin, Glimmer, Talkum, Chlorit und Verwachsungen wie Chlorittalk und Plastorit (Glimmer/Chlorit/Quarz) verstanden. Besonders bevorzugt ist Talkum.

Bevorzugt weist der plättchenförmige, mineralische Füllstoff ein mittels hochauflösender Röntgencomputertomographie zu bestimmendes Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der plättchenförmigen, mineralischen Füllstoffe liegt bevorzugt bei kleiner 20 μm, besonders bevorzugt bei kleiner 15 μm, insbesondere bevorzugt bei kleiner 10 μm.

Bevorzugt wird als Füllstoff aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 μm eingesetzt, bevorzugt im Bereich von 10 bis 150 μm, besonders bevorzugt im Bereich von 15 bis 80 μm, ganz besonders bevorzugt im Bereich von 16 bis 25 μm. Bezüglich der d90-Werte, ihrer Bestimmung und ihrer

Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90% der Partikelmenge liegen.

Erfindungsgemäß bevorzugt ist das nicht-faserförmige und nicht-geschäumte gemahlene Glas von partikelförmiger, nicht zylindrischer Gestalt und hat ein mittels Laserdiffraktometrie gemäß ISO 13320 zu bestimmendes Längen- zu Dickenverhältnis kleiner 5, bevorzugt kleiner als 3, besonders bevorzugt kleiner 2. Der Wert Null ist selbstverständlich ausgeschlossen.

Das als Füllstoff besonders bevorzugt einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem mittels Laserdiffraktometrie gemäß **ISO 13320** zu bestimmenden Längen- zu Durchmesserverhältnis (L/D-Verhältnis) größer 5 aufweist.

Das erfindungsgemäß als Füllstoff besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Ausgangsmaterialien für die Vermahlung des in einer Ausführungsform als Füllstoff einzusetzenden nicht-faserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füllstoffen, insbesondere in Form von sogenannten Schmelzekuchen, anfallen kann. Das Glas kann gefärbt sein, wobei nicht-gefärbtes Glas als Ausgangsmaterial zum Einsatz als Füllstoff bevorzugt ist.

Erfindungsgemäß besonders bevorzugt sind Langglasfasern basierend auf E-Glas (DIN 1259), vorzugsweise mit einer mittleren Länge d50 von 4,5mm, wie sie beispielsweise als CS 7967 bei der LANXESS Deutschland GmbH, Köln, erhältlich sind.

## Sonstige Additive

Neben dem PET und gegebenenfalls dem Füllstoff können erfindungsgemäß in einer bevorzugten Ausführungsform dem PBT weitere Additive zugesetzt werden. Erfindungsgemäß bevorzugt einzusetzende Additive sind Stabilisatoren, insbesondere UV-Stabilisatoren, Thermostabilisatoren, Gammastrahlenstabilisatoren, ferner Antistatika, Elastomermodifikatoren, Fließhilfsmittel, Entformungsmittel, Flammschutzmittel, Emulgatoren, Nukleierungsmittel, Weichmacher, Gleitmittel, Farbstoffe, Pigmente und Additive zur Erhöhung der elektrischen Leitfähigkeit. Die genannten und weitere geeignete Additive sind zum Beispiel beschrieben in Gächter, Müller, Kunststoff-Additive, 3. Ausgabe, Hanser-Verlag, München, Wien, 1989 **und im** Plastics Additives Handbook, 5th Edition, Hanser-Verlag, München, 2001**.** Die Additive können alleine, oder in Mischung bzw. in Form von Masterbatchen eingesetzt werden.

**Kraftfahrzeuginnenausstattung** Der Begriff Kraftfahrzeuginnenausstattung betrifft im Sinne der vorliegenden Erfindung alle Spritzgussteile, die nicht Bestandteil der Außenoberfläche eines Kraftfahrzeugs sind bzw. keinen Flächenanteil an der Außenoberfläche eines Kraftfahrzeugs haben.

Erfindungsgemäß zu fertigende Spritzgussteile für eine Kraftfahrzeuginnenausstattung sind neben den eingangs im Stand der Technik beschriebenen Komponenten vorzugsweise Blenden, Stecker, Elektrikbauteile oder Elektronikbauteile. Diese werden in steigender Anzahl im Innenraum heutiger Automobile verbaut, um die zunehmende Elektrifizierung vieler Komponenten, insbesondere Fahrzeugsitze oder Infotainment Module, zu ermöglichen. Ferner werden PBT basierte Komponenten im Automobil häufig für Funktionsteile mit mechanischer Beanspruchung eingesetzt.

Die vorliegende Offenbarung betrifft bevorzugt Kraftfahrzeuginnenausstattungen enthaltend Compounds basierend auf PBT im Gemisch mit PET sowie wenigstens einen Füllstoff, vorzugsweise Glasfasern, wobei in den Compounds auf 100 Massenanteile PBT 5 bis 30 Massenanteile PET, vorzugsweise 10 bis 25 Massenanteile PET, besonders bevorzugt 12 bis 17 Massenanteile PET und 0,001 bis 70 Massenanteile, besonders bevorzugt 5 bis 50 Massenanteile, ganz besonders bevorzugt 9 bis 48 Massenanteile Füllstoff eingesetzt werden, vorzugsweise mit einem nach VDA 277 zu bestimmenden TVOC < 50$\mu$gC/g und einem nach VDA 278 zu bestimmenden $VOC_{THF}$ < 5 $\mu$g/g.

## Herstellverfahren für Bauteile des Kraftfahrzeuginnenraums

Die Verarbeitung erfindungsgemäß einzusetzender PBT basierter Compounds erfolgt in vier Schritten:

1) Polymerisierung des PBT aus BDO und PTA oder BDO und DMT;
2) Compoundierung indem PET sowie gegebenenfalls wenigstens ein Füllstoff, insbesondere Talkum oder Glasfasern, sowie gegebenenfalls wenigstens ein weiteres Additiv, insbesondere Thermostabilisator, Entformungsmittel oder Pigment, der Schmelze aus PBT zugegeben, eingearbeitet und durchmischt wird;
3) Austragen und Erstarren der Schmelze sowie Granulierung und Trocknung des Granulats mit warmer Luft bei

erhöhter Temperatur;

4) Herstellung einer Kraftfahrzeuginnenausstattung aus dem getrockneten Granulat durch Spritzguss.

**Spritzguss**

Das hier offenbarte Verfahren zur Herstellung von Kraftfahrzeuginnenausstattungen durch Spritzguss werden bei Schmelzetemperaturen im Bereich von 160 bis 330°C, bevorzugt im Bereich von 190 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar, durchgeführt. Die hier offenbarten PBT basierten Compounds bzw. Compounds zeichnen sich dabei durch besondere Schmelzestabilität aus, wobei der Fachmann im Rahmen der vorliegenden Erfindung unter Schmelzestabilität versteht, dass auch nach Verweilzeiten > 5 min deutlich oberhalb des Schmelzpunktes der Formmasse von >260°C kein Aufbau der nach ISO 1133 (1997) zu bestimmenden Schmelzviskosität beobachtet wird.

Das Verfahren des Spritzgusses zeichnet sich dadurch aus, dass der Rohstoff in Form des erfindungsgemäß einzusetzenden Compounds, bevorzugt in Granulatform, in einem beheizten zylindrischen Hohlraum aufgeschmolzen (plastifiziert) und als Spritzmasse unter Druck in einen temperierten Hohlraum eines profilgebenden Werkzeugs zugeführt wird. Als Rohstoff werden erfindungsgemäße Compounds eingesetzt, die vorzugsweise durch Compoundieren im Compounder, vorzugsweise unter Vakuum bei einem Druck von 300 +/-50 mbar, bereits zu einer Formmasse und diese wiederum vorzugsweise zu einem Granulat verarbeitet wurden. In einer Ausführungsform kann aber auf das Granulieren verzichtet werden und die Formmasse direkt unter Druck einem profilgebenden Werkzeug zugeführt werden. Nach dem Abkühlen (Erstarren) der in den temperierten Hohlraum eingespritzten Formmasse wird das Spritzgussteil entformt.

Vorzugsweise werden nach dem hier offenbarten Verfahren Kraftfahrzeuginnenausstattungen erhalten, die einen nach VDA 277 zu bestimmenden TVOC < 50μgC/g und einem nach VDA 278 zu bestimmenden VOCTHF < 8 μg/g aufweisen.

Vorzugsweise wird im hier offenbarten Verfahren Polybutylenterephthalat eingesetzt, das eine in einer 0,5 gew.-%igen Lösung bei 25°C in einem Phenol/o-Dichlorbenzolgemisch im Gew.-Verh. 1 : 1 gemäß DIN EN ISO 1628-5 zu bestimmende Viskositätszahl in einem Bereich von 50 bis 220 $cm^3/g$ aufweist.

Vorzugsweise weist beim hier offenbarten Verfahren das Polybutylenterephthalat einen mittels Röntgen-Fluoreszenz-Analyse (RFA) nach DIN 51418 zu bestimmenden Ti-Gehalt von ≤ 250 ppm auf.

Vorzugsweise enthält das im hier offenbarten Verfahren einzusetzende Polyethylenterephthalat mindestens 80 Mol %, bezogen auf die Dicarbonsäure, Terephthalsäurereste und mindestens 80 Mol %, bezogen auf die Diolkomponente, Ethylenglykolreste.

Vorzugsweise wird im hier offenbarten Verfahren Polyethylenterephthalat mit einer intrinsischen Viskosität im Bereich von ca. 30 cm3/g bis 150 $cm^3/g$ gemessen in Analogie zu ISO1628-1 in Phenol/o-Dichlorbenzol - 1:1 Gew.-Teile - bei 25°C mittels eines Ubbelohde Viskosimeters eingesetzt.

Vorzugsweise wird im hier offenbarten Verfahren zusätzlich zum Polybutylenterephthalat und zum Polyethylenterephthalat wenigstens ein Füllstoff in Mengen im Bereich von 0,001 bis 70 Massenanteile bezogen auf 100 Massenanteile Polybutylenterephthalat eingesetzt. Besonders bevorzugt wird hierfür ein Füllstoff aus der Gruppe Talk, Glimmer, Silikat, Quarz, Titandioxid, Wollastonit, Kaolin, Kyanit, amorphe Kieselsäuren, Magnesiumcarbonat, Kreide, Feldspat, Bariumsulfat, Glaskugeln und faserförmige Füllstoffe, insbesondere Glasfasern oder Kohlenstofffasern, insbesondere ganz besonders bevorzugt Glasfasern, eingesetzt.

In bevorzugter Ausführungsform wird im hier offenbarten Verfahren der einzusetzende

Füllstoff mit einem Haftvermittler auf Silanbasis der allgemeinen Formel (I)

$$(X\text{-}(CH_2)_q)_k\text{-}Si\text{-}(O\text{-}C_rH_{2r+1})_{4-k} \qquad (I)$$

eingesetzt, worin

- X für $NH_2$-, Carboxyl-, HO- oder steht,
- q für eine ganze Zahl von 2 bis 10steht,
- r für eine ganze Zahl von 1 bis 5 steht und
- k für eine ganze Zahl von 1 bis 3 steht.

Vorzugsweise werden nach dem hier offenbarten Verfahren Kraftfahrzeuginnenausstattungen erhalten, insbesondere Blenden, Stecker, Elektrikbauteile oder Elektronikbauteile.

Die nachfolgenden Beispiele dienen der Erläuterung der Erfindung, ohne dabei limitierend zu wirken.

## Beispiele

### TVOC

Um den TVOC Wert von Proben im Rahmen der vorliegenden Erfindung zu bestimmen, wurden je ca. 2 g einer zerkleinerten Probe gemäß der Vorschrift nach VDA 277 (Stücke mit ca. 20 mg) in ein 20 mL Probengläschen mit Schraubdeckel und Septum eingewogen. Diese wurden 5 h bei 120°C im Headspace-Ofen erwärmt. Anschließend wurde eine kleine Probe des Gasraums in den Gaschromatographen (Agilent 7890B GC) injiziert und analysiert. Als Detektor wurde ein Agilent 5977B MSD verwendet. Die Analyse wurde als Dreifachbestimmung durchgeführt und mittels einer Aceton-Kalibrierung semi-quantitativ ausgewertet. Das Ergebnis wurde in µgC/g bestimmt. Der im Rahmen der vorliegenden Erfindung nicht zu überschreitende Grenzwert lag bei 50 µgC/g. Die Analyse orientierte sich an der VDA 277 Prüfvorschrift.

### VOC

Der VOC Wert wurde bestimmt, indem 20 mg einer Probe gemäß der Vorschrift nach VDA 278 in ein Thermodesorptionsrohr für GERSTEL-TD 3.5+ mit Fritte der Firma Gerstel (020801-005-00) eingewogen wurden. Dieses wurde im Helium-Strom für 30 min auf 90°C erhitzt und die dabei desorbierten Substanzen in einer nachgeschalteten Kühlfalle bei -150°C ausgefroren. Nach Ablauf der Desorptionszeit wurde die Kühlfalle zügig auf 280°C erhitzt und die gesammelten Substanzen chromatographisch getrennt (Agilent 7890B GC). Die Detektion erfolgte über ein Agilent 5977B MSD. Die Auswertung erfolgte semi-quantitativ anhand einer Toluol-Kalibrierung. Das Ergebnis wurde in µg/g bestimmt. Der im Rahmen der vorliegenden Erfindung nicht zu überschreitende Grenzwert lag bei 100 µg/g Gesamt-VOC bzw. 5 µg/g THF. Die Analyse orientierte sich an der VDA 278 Prüfvorschrift.

## Edukte

Polybutylenterephthalat (PBT): LANXESS Pocan® B1300

Polyethylenterephthalat (PET): Equipolymers Lighter™ C93

Glasfaser (GF): LANXESS CS7967D, mit 0,9 Gew.-% mittels Silan oberflächenbeschichtete Glasfasern einer mittleren Länge im Bereich von 4,5mm aus E-Glas und einem mittleren Filamentdurchmesser von 10 micrometer

## Vorbereitung der Proben

### Beispiel 1

Der verwendete Compounder war ein Doppelschneckenextruder ZSK 92 der Firma Coperion. Der Compounder wurde mit einer Schmelzetemperatur von ca. 270°C und einem Durchsatz von 4 Tonnen pro Stunde sowie bei einem Druck von 300 +/- 50 mbar betrieben. Die Stränge wurden im Wasserbad gekühlt, auf einer Rampe im Luftstrom getrocknet und anschließend trocken granuliert.

Für das Beispiel wurde ein Compound auf Basis einer PBT Formmasse enthaltend 50 Massenanteile geschnittene Glasfasern und 15 Massenanteile PET auf 100 Massenanteile PBT verwendet. Das hierbei eingesetzte PBT wies einen nach VDA 277 bestimmten TVOC-Wert von 170 µgC/g auf.

Das compoundierte Material wurde anschließend 4 h bei 120°C im Trockenlufttrockner getrocknet und unter Standardbedingungen (260°C Massetemperatur, 80°C Werkzeugtemperatur) im Spritzguss verarbeitet.

### Vergleichsbeispiel

Der verwendete Compounder war ein Doppelschneckenextruder ZSK 92 der Firma Coperion. Der Compounder wurde mit einer Schmelzetemperatur von ca. 270°C und einem Durchsatz von 4 Tonnen pro Stunde sowie bei einem Druck von 300 +/- 50 mbar betrieben. Die Stränge wurden im Wasserbad gekühlt, auf einer Rampe im Luftstrom getrocknet und anschließend trocken granuliert.

Für das Beispiel wurde ein Compound basierend auf einer PBT Formmasse enthaltend 43,3 Massenanteile geschnittene Glasfasern verwendet. Das hierbei eingesetzte PBT wies einen nach VDA 277 bestimmten TVOC-Wert von 170 µgC/g auf.

Das compoundierte Material wurde 4 h bei 120°C im Trockenlufttrockner getrocknet und unter Standardbedingungen (260°C Massetemperatur, 80°C Werkzeugtemperatur) im Spritzguss verarbeitet.

**Tab.2**

| Massenanteile bezogen auf 100 Massenanteile PBT | VDA 277: TVOC | $TVOC_{THF}$ | $\%_{THF}$ | VDA 278: THF |
|---|---|---|---|---|
| **Vergleichsbeispiel:** | [µgC/g] | [µgC/g] | [%] | [µg/g] |
| **43,3 Massenanteile GF** | | | | |
| Granulat | 60,3 | 54,7 | 91 | 4,9 |
| Bauteil (Spritzguss) | 95,2 | 82,5 | 87 | 6,0 |
| **Beispiel (erfindunqsqemäß):** | | | | |
| **50 Massenanteile GF + 15 Massenanteile PET** | | | | |
| Granulat | 26,9 | 22,8 | 85 | 1,2 |
| Bauteil (Spritzguss) | 33,8 | 28,8 | 85 | 1,6 |

Mittels Spritzguss wurden sowohl beim erfindungsgemäßen Beispiel als auch beim Vergleichsbeispiel jeweils 5 Vielzweckprüfkörper 1A nach **DIN EN ISO 527-2** hergestellt und daran gemäß VDA 277 und VDA 278 der THF Gehalt bestimmt [Bauteil(Spritzguss)]. **Tab. 2** gibt die gemittelten Werte aus den jeweils zwei Messungen (Doppelbestimmung) wieder. Im Falle der untersuchten Granulate wurden 2x 2 g (VDA277) bzw. 2x 20 mg (VDA278) abgewogen und daran gemäß VDA 277 und VDA 278 als Doppelbestimmung der THF Gehalt bestimmt.

**Tab. 2** zeigt die nach Vorschrift gemäß VDA 277 am getrockneten Granulat vor dem Spritzguss sowie am verspritzten Vielzweckprüfkörper 1A nach **DIN EN ISO 527-2** gemessenen TVOC und $TVOC_{THF}$ Werte sowie den prozentualen Anteil von THF an den Gesamtemissionen $\%_{THF}$. Außerdem dargestellt sind die nach Vorschrift gemäß VDA 278 gemessenen THF-Werte am getrockneten Granulat vor dem Einsatz im Spritzguss sowie am verspritzten Vielzweckprüfkörper 1A nach **DIN EN ISO 527-2.**

Die in **Tab.2** dargestellten Versuchsergebnisse zeigen, dass die Zugabe von 15 Massenanteilen PET zu 100 Massenanteilen PBT im erfindungsgemäßen Beispiel, zu einer deutlichen Reduktion der THF Menge und damit der Gesamtemission führt. Besonders überraschend ist hierbei das Ausmaß der Reduktion mit -64,5% TVOC (33,8 im Vergleich zu 95,2) und -65,1% $TVOC_{THF}$ (28.8 im Vergleich zu 82,5) sowie -73,3% $VOC_{THF}$ (1,6 im Vergleich zu 6,0) am Bauteil, welche deutlich über den Verdünnungseffekt des PBT durch das PET hinausgeht. Für den Fachmann war dieser Einfluss auf den TVOC und die Bildung von THF aus PBT während der Verarbeitung nicht zu erwarten, da für den Fachmann von dem PET keine reaktive Wirkung zu erwarten war.

## Patentansprüche

1. Verwendung von Polyethylenterephthalat zur Reduktion des Ausgasens von Tetrahydrofuran aus Polybutylenterephthalat basierten Compounds für die Verarbeitung im Spritzguss zu Bauteilen in Kraftfahrzeuginnenräumen mit einem nach VDA 277 zu bestimmenden TVOC < 50µgC/g und einem nach VDA 278 zu bestimmenden $VOC_{THF}$ < 8 µg/g, wobei auf 100 Massenanteile Polybutylenterephthalat 5 bis 30 Masseneinteile Polyethylenterephthalat eingesetzt werden, mit der Maßgabe, dass Polyethylenterephthalat und Polybutylenterephthalat nicht als Copolymerisat sondern als Mischung vorliegen.

2. Verwendung gemäß Anspruch 1, **dadurch gekennzeichnet, dass** das Polyethylenterephthalat eine intrinsische Viskosität im Bereich von 30 $cm^3/g$ bis 150 $cm^3/g$ gemessen, wie in der Anmeldung beschrieben, in Analogie zu ISO1628-1 in Phenol/o-Dichlorbenzol -1:1 Gew.-Teile - bei 25°C mittels eines Ubbelohde Viskosimeters aufweist.

3. Verwendung gemäß Anspruch 1, **dadurch gekennzeichnet, dass** das Polyethylenterephthalat eine intrinsische Viskosität im Bereich von 40 $cm^3/g$ bis 130 $cm^3/g$ gemessen, wie in der Anmeldung beschrieben, in Analogie zu ISO1628-1 in Phenol/o-Dichlorbenzol -1:1 Gew.-Teile - bei 25°C mittels eines Ubbelohde Viskosimeters aufweist.

4. Verwendung gemäß Anspruch 1, **dadurch gekennzeichnet, dass** das Polyethylenterephthalat eine intrinsische Viskosität im Bereich von 50 $cm^3/g$ bis 100 $cm^3/g$ gemessen, wie in der Anmeldung beschrieben, in Analogie zu ISO1628-1 in Phenol/o-Dichlorbenzol -1:1 Gew.-Teile - bei 25°C mittels eines Ubbelohde Viskosimeters aufweist.

## Claims

1. Use of polyethylene terephthalate for reducing outgassing of tetrahydrofuran from polybutylene terephthalate-based compounds for processing by injection molding into components in automotive interiors having a TVOC to be determined according to VDA 277 of < 50 µgC/g and a $VOC_{THF}$ to be determined according to VDA 278 of < 8 µg/g, wherein per 100 parts by mass of polybutylene terephthalate 5 to 30 parts by mass of polyethylene terephthalate are employed, with the proviso that polyethylene terephthalate and polybutylene terephthalate are present not as a copolymer but rather as a mixture.

2. Use according to Claim 1, **characterized in that** the polyethylene terephthalate has an intrinsic viscosity in the range from 30 $cm^3/g$ to 150 $cm^3/g$ measured, as described in the application, analogously to ISO 1628-1 in phenol/o-dichlorobenzene - 1:1 parts by weight - at 25°C using an Ubbelohde viscometer.

3. Use according to Claim 1, **characterized in that** the polyethylene terephthalate has an intrinsic viscosity in the range from 40 $cm^3/g$ to 130 $cm^3/g$ measured, as described in the application, analogously to ISO 1628-1 in phenol/o-dichlorobenzene - 1:1 parts by weight - at 25°C using an Ubbelohde viscometer.

4. Use according to Claim 1, **characterized in that** the polyethylene terephthalate has an intrinsic viscosity in the range from 50 $cm^3/g$ to 100 $cm^3/g$ measured, as described in the application, analogously to ISO 1628-1 in phenol/o-dichlorobenzene - 1:1 parts by weight - at 25°C using an Ubbelohde viscometer.

## Revendications

1. Utilisation de poly(téréphtalate d'éthylène) pour la réduction du dégazage de tétrahydrofurane à partir de composés à base de poly(téréphtalate de butylène) pour une mise en oeuvre en moulage par injection, pour donner des composants de l'habitacle intérieur d'un véhicule, avec un COVT, devant être déterminé selon VDA 277, < 50 µgC/g et un $COV_{THF}$, devant être déterminé selon VDA 278, < 8 µg/g, avec utilisation, pour 100 parties en masse de poly(téréphtalate de butylène), de 5 à 30 parties en masse de poly(téréphtalate d'éthylène), à la condition que le poly(téréphtalate d'éthylène) et le poly(téréphtalate de butylène) ne se présentent pas sous forme d'un copolymère, mais d'un mélange.

2. Utilisation selon la revendication 1, **caractérisée en ce que** le poly(téréphtalate d'éthylène) présente une viscosité intrinsèque dans la plage de 30 $cm^3/g$ à 150 $cm^3/g$, mesurée, comme décrit dans la demande, par analogie avec ISO1628-1 dans un mélange 1:1 parties en poids de phénol/o-dichlorobenzène, à 25° C à l'aide d'un viscosimètre Ubbelohde.

3. Utilisation selon la revendication 1, **caractérisée en ce que** le poly(téréphtalate d'éthylène) présente une viscosité intrinsèque dans la plage de 40 $cm^3/g$ à 130 $cm^3/g$, mesurée, comme décrit dans la demande, par analogie avec ISO1628-1 dans un mélange 1:1 parties en poids de phénol/o-dichlorobenzène, à 25° C à l'aide d'un viscosimètre Ubbelohde.

4. Utilisation selon la revendication 1, **caractérisée en ce que** le poly(téréphtalate d'éthylène) présente une viscosité intrinsèque dans la plage de 50 $cm^3/g$ à 100 $cm^3/g$, mesurée, comme décrit dans la demande, par analogie avec ISO1628-1 dans un mélange 1:1 parties en poids de phénol/o-dichlorobenzène, à 25° C à l'aide d'un viscosimètre Ubbelohde.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2013020627 A1
- EP 2029271 A1
- EP 0683201 A1
- EP 1070097 A1
- WO 9950345 A1
- EP 1999181 A2
- WO 2007111890 A2
- EP 2427511 B1
- EP 2816081 A1
- EP 3287493 A1
- JP 2016145333 A
- EP 3004242 A1
- WO 2014195176 A1
- DE 20320505 U1
- DE 4401055 A
- DE 10155419 B4
- DE 2407674 A
- DE 2407776 A
- DE 2715932 A
- DE 1900270 A


### In der Beschreibung aufgeführte Nicht-Patentliteratur


- **B. SEIFERT.** Bundesgesundheitsblatt-Gesundheitsforschung - Gesundheitsschutz. Springer-Verlag, 1999, vol. 42, 270-278
- *AutomobilKONSTRUKTION,* Februar 2011, 18-19
- *CHEMICAL ABSTRACTS,* 24968-12-5
- *CHEMICAL ABSTRACTS,* 25038-59-9
- Kunststoff-Handbuch. Karl-Hanser-Verlag, 1973, vol. VIII, 695-703
- **M. SCHOßIG.** Schädigungsmechanismen in faserverstärkten Kunststoffen. Vieweg und Teubner Verlag, 2011, vol. 1, 35
- *CHEMICAL ABSTRACTS,* 65997-17-3
- **J.KASTNER et al.** Quantitative Messung von Faserlängen und -verteilung in faserverstärkten Kunststoffteilen mittels μ-Röntgen-Computertomographie. *DGZfP-Jahrestagung,* 2007, vol. 47
- Chemie Ingenieur Technik. Wiley-VCH Verlags GmbH, 2000, vol. 72, 273-276
- **GÄCHTER, MÜLLER.** Kunststoff-Additive. Hanser-Verlag, 1989
- Plastics Additives Handbook. Hanser-Verlag, 2001